(19)

**Europäisches Patentamt**
**European Patent Office**
**Office européen des brevets**

(11)　**EP 4 641 445 A1**

(12)　**EUROPEAN PATENT APPLICATION**

(43) Date of publication:
　　29.10.2025　Bulletin 2025/44

(21) Application number: 25171934.0

(22) Date of filing: 23.04.2025

(51) International Patent Classification (IPC):
　　*G06N 3/0455* (2023.01)　　*G06N 3/09* (2023.01)

(52) Cooperative Patent Classification (CPC):
　　G06N 3/0455; G06N 3/09

(84) Designated Contracting States:
　　AL AT BE BG CH CY CZ DE DK EE ES FI FR GB
　　GR HR HU IE IS IT LI LT LU LV MC ME MK MT NL
　　NO PL PT RO RS SE SI SK SM TR
　　Designated Extension States:
　　BA
　　Designated Validation States:
　　GE KH LA MA MD TN

(30) Priority:　23.04.2024　US 202418643794

(71) Applicant: Nielsen Consumer LLC
　　Chicago, IL 60606 (US)

(72) Inventors:
　• DAHIYA, Kunal
　　131402 Sonipat, Haryana (IN)
　• ORTEGO HERNÁNDEZ, Diego
　　28100 Alcobendas, Madrid (ES)
　• JIMÉNEZ CABELLO, David
　　19142 Lupiana, Guadalajara (ES)

(74) Representative: Samson & Partner Patentanwälte
　　mbB
　　Widenmayerstraße 6
　　80538 München (DE)

(54)　**METHODS, SYSTEMS, ARTICLES OF MANUFACTURE, AND APPARATUS FOR OBJECT-TO-OBJECT RECOMMENDATION USING LABEL PROTOTYPES AND SELF-ATTENTION**

(57)　An example apparatus disclosed includes interface circuitry, machine readable instructions, and programmable circuitry to at least one of execute or instantiate the machine readable instructions to identify a first source of object label representation and a second source of object label representation, the first source or the second source including an estimated label prototype vector associated with an input text-based object query, determine a first contextualized embedding for the first source and a second contextualized embedding for the second source, and combine the first contextualized embedding and the second contextualized embedding to generate a candidate object representation associated with the input text-based object query.

EP 4 641 445 A1

**Description**

FIELD OF THE DISCLOSURE

This disclosure relates generally to software processing, and, more particularly, to methods, systems, articles of manufacture, and apparatus for object-to-object recommendation using label prototypes and self-attention.

BACKGROUND

Artificial intelligence (AI)-based recommendations can be generated to assist users in identifying relevant content and/or products associated with user preferences, buying behaviors, and/or browsing history. For example, AI-based algorithms can analyze user data to generate personalized recommendations including product-to-product recommendations, article recommendations, and/or advertisement recommendations.

BRIEF DESCRIPTION OF THE DRAWINGS

FIG. 1 is an example of a first architecture using a deep encoder with auxiliary parameters (DEXA) during training.
FIG. 2 is an example of a second architecture using the DEXA of FIG. 1, including estimated prototypes and a self-attention model for identifying a candidate product representation using example product identifier circuitry.
FIG. 3 is an example diagram of a comparison of results obtained using the DEXA architecture of FIG. 1 and the DEXA architecture of FIG. 2.
FIG. 4 is a block diagram representative of the product identifier circuitry that may be implemented for identifying a candidate product representation.
FIG. 5 is a flowchart representative of example machine-readable instructions and/or example operations that may be executed, instantiated, and/or performed by example programmable circuitry to implement the example product identifier circuitry of FIG. 4.
FIG. 6 is a flowchart representative of example machine-readable instructions and/or example operations that may be executed, instantiated, and/or performed by example programmable circuitry to implement the example product identifier circuitry of FIG. 2 to identify estimated label prototypes.
FIG. 7 is a flowchart representative of example machine-readable instructions and/or example operations that may be executed, instantiated, and/or performed by example programmable circuitry to implement the example product identifier circuitry of FIG. 2 to obtain a second single vector representation of candidate product description based on identified label representations.
FIG. 8 is a block diagram of an example processing platform including programmable circuitry structured to execute, instantiate, and/or perform the example machine readable instructions and/or perform the example operations of FIGS. 5-7 to implement the product identifier circuitry of FIG. 2.
FIG. 9 is a block diagram of an example implementation of the programmable circuitry of FIG. 8.
FIG. 10 is a block diagram of another example implementation of the programmable circuitry of FIG. 8.

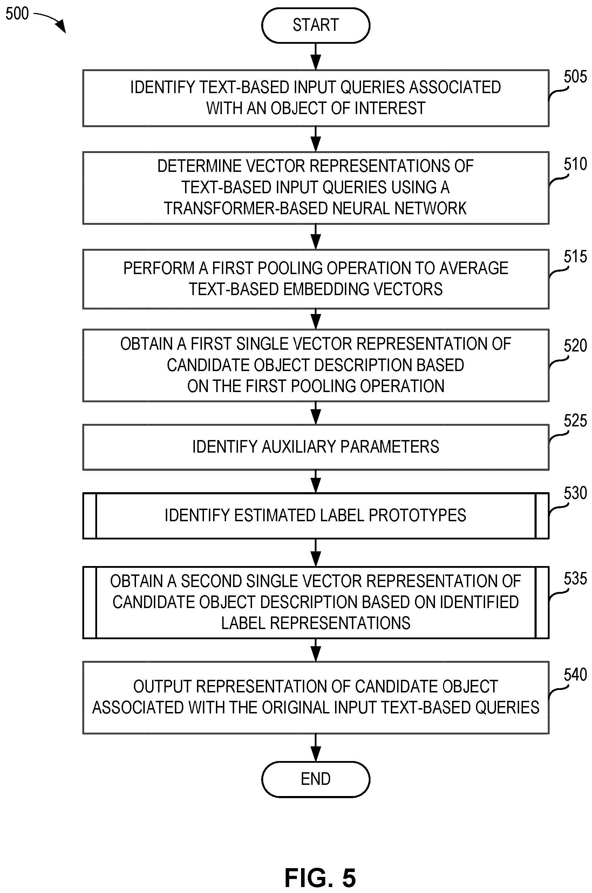

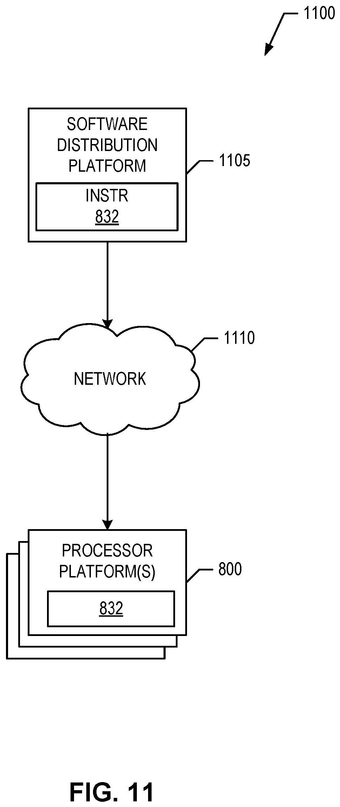

FIG. 11 is a block diagram of an example software/firmware/instructions distribution platform (e.g., one or more servers) to distribute software, instructions, and/or firmware (e.g., corresponding to the example machine readable instructions of FIGS. 5-7) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale.

DETAILED DESCRIPTION

In machine learning, extreme classification (EC) focuses on multi-class and multi-label problems involving extremely large label sets. Areas of EC-based application include product-to-product recommendations, programming code block recommendations, traffic signal device recommendations, document tagging, article recommendations, targeted medical treatment recommendations (e.g., based on labeled symptom data), sponsored searches, and/or advertisement recommendations. For example, product-to-product recommendations can be used for product matching or recommendations during item coding. In both tasks, a text description of a query product is given, and related products from an existing database are suggested to the user. Similarly, related code blocks are suggested to a user in a coding-based query and related medications are suggested to a physician in a medical prescription-based query, etc. In still other examples, recommendations and/or outputs generated herein cause corresponding actions to be instantiated. For instance, inputs (e.g., objects, text objects, sentence objects, etc.) related to patient symptom data result in ailment recommendation output and dispatch tasks to acquire or ship relevant medications to treat ailments and/or symptoms of the patient. In some examples, a first source of object labels corresponds to traffic data and recommended outputs correspond to traffic equipment control instructions to, for instance, reduce traffic congestion, improve safety, etc. In some examples related to consumer products, related products are used in product matching to bind the matching task to a subset of potential candidates. As such, examples disclosed herein cause potential candidates to be dispatched from a warehouse to a destination (e.g., consumer residence, retail location, etc.). In item coding, these products contain similar characteristics to the query product that human coders can reuse to expedite the product identification process. As such, online retailers can recommend products to a user either based on what the user is currently browsing or the user's purchase history. For example, product-to-product recommendations from Amazon® are identified using benchmark datasets (e.g., LF-AmazonTitles-131K, LF-AmazonTitles-1.3M, etc.). Likewise, tagging web articles with keywords or categories can be helpful in searching or recommending similar webpages to users such that examples disclosed herein cause the recommended webpages to be rendered and/or otherwise transmitted to browsers. For example, label descriptions for such tasks are available in the form of a label-text.

Identifying an encoder that can embed relevant items together and irrelevant items far apart in the embedding space forms a component of traditional model classification methods (e.g., Siamese model classification) as well as known EC-based methods (e.g., SiameseXML, NGAME, deep encoder with auxiliary parameters (DEXA), etc.). However, the label-text may be insufficient in some examples, especially in short-text scenarios, and may lead to distorted encoder training. While this challenge can be addressed by offering a correction term to each label, the application of correction terms is computationally expensive and requires additional memory capacity. In some examples, the correction term may be shared for similar labels, thereby improving the quality of the encoder with reduced overheads. For example, labels can be grouped into clusters and assigned a linear correction term for each cluster.

State-of-the-art results on multiple benchmark datasets have been achieved using known EC-based methods (e.g., DEXA). However, such known EC-based methods do not incorporate alternative sources of information from documents identified as being relevant to the product-to-product recommendation task. Likewise, known methods deploy a simplistic linear combiner that can be sub-optimal (e.g., lacking accuracy). Methods, systems, articles of manufacture, and apparatus disclosed herein introduce an improved version of the EC-based method associated with a deep encoder with auxiliary parameters (DEXA). In examples disclosed herein, DEXA is structured to include the use of label prototypes and a self-attention module. In examples disclosed herein, label representation is improved by (1) deploying a more elaborate architecture to fuse views of label-based correction terms, and (2) aggregating the information from relevant documents (e.g., documents having contextual and/or semantic similarities to a given input query) via label prototypes. In examples disclosed herein, the DEXA-based improved architecture enhances label representations by utilizing relevant document information associated with a product of interest. Separately, a self-attention module fuses two or more sources of information (e.g., text-embedding information, auxiliary parameters, estimated prototypes, etc.) to obtain a final product representation.

In examples disclosed herein, similarity between the document and label embeddings in the semantic space is optimized in addition to optimizations performed in the final embedding space. The DEXA-based architectural improvements disclosed herein alongside an enhanced loss function cause performance-based improvements on publicly available benchmark dataset(s). In examples disclosed herein, the updated DEXA architecture (e.g., including the use of a label prototype and a self-attention module discussed in further detail below) contribute to improving the existing solutions for product-to-product recommendation via extreme multi-label classification. For example, while the use of auxiliary parameters improves encoder training (e.g., since a semantic gap or an incomplete label-text may lead to distorted training of the encoder), the example DEXA architecture disclosed herein improves the similarity in the semantic space even when this similarity is not directly utilized in product-based predictions. Examples disclosed herein show that the DEXA architecture disclosed herein outperforms the best performing known approaches in product-to-product recommendation using benchmark datasets, while avoiding the addition of any overhead (e.g., specialized processor circuitry, accelerators, graphical processing units (GPUs), memory, etc.) at inference time as compared to known EC-based methods.

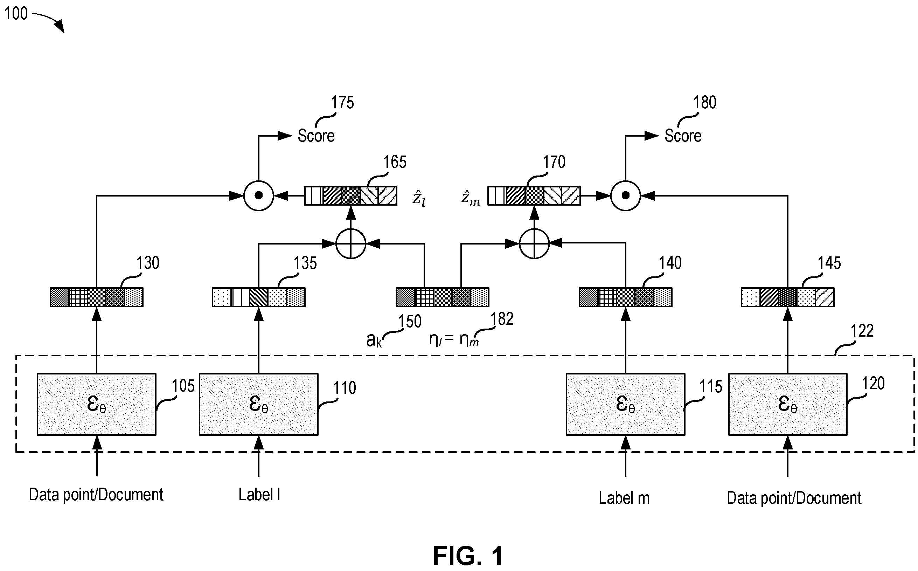

FIG. 1 is an example of a first architecture 100 using a deep encoder with auxiliary parameters (DEXA) during training. Extreme classification (EC)-based methods can be applied for ranking, recommendation, and tagging using a combination architecture that includes a deep encoder and a high-capacity classifier. In the example of FIG. 1, DEXA augments encoder training with auxiliary parameters, such that DEXA can be incorporated into existing architectures requiring reduced modifications while scaling to datasets with extremely large numbers of labels (e.g., 40 million labels, etc.). Furthermore, the DEXA architecture 100 augments the encoder with auxiliary parameters such that label representations are not constrained by label text alone. In some examples, having access to textual descriptors for both data points and labels allows for the training of encoders that embed both data points and labels into a shared embedding space such that related data points and labels are embedded in close proximity of each other. In some examples, textual descriptions are not descriptive enough, making bringing related data points and labels close to each other in the embedding space a challenging task for the encoder. The existence of such a semantic gap in the label descriptions is common in short-text applications. For example, a document titled "Constitutional reforms of Julius Caesar" can introduce a textual description that is not sufficient to predict related pages such as "Acta Senatus" (e.g., a reform associated with the Roman Senate).

In the example of FIG. 1, an encoder ($\varepsilon_\theta$) (e.g., encoder 105, 110, 115, 120) is used to embed data points and labels (e.g., label $l$, label $m$, etc.) with $\theta$ representing the parameters of a standard transformer encoder neural network. In examples disclosed herein, $\theta$ parameters are $N$ transformer encoder blocks that contains multi-head attention layers, linear layers, and/or layer normalization layers, where N represents a number of layers of the model. In the example of FIG. 1, the encoder(s) 105, 110, 115, 120 are part of a first transformer-based neural network 122. In the example of FIG. 1, the encoder(s) 105, 110, 115, 120 output a vector representation (e.g., vector representation(s) 130, 135, 140, 145) of the input data point and/or label. In some examples, DEXA architecture 100 uses $K$ auxiliary vectors $A \overset{\text{def}}{=} \{a_k\}_{k\epsilon[K]}$, where $a_k\epsilon\mathbb{R}^D$ to train the encoder(s) 105, 110, 115, 120. In the example of FIG. 1, the generated vector(s) 135, 140 and an example auxiliary vector ($a_k$) 150 are used to obtain a Kronecker product ($\otimes$) resulting in example augmented label embedding vector(s) 165, 170 (e.g., $\hat{z}_l$, $\hat{z}_m$) (text-embedding vectors). In some examples, once encoder training is completed, the encoder is frozen and augmented embedding of each label is determined ($\hat{z}_l$, $\hat{z}_m$), such that the augmented label embeddings are preserved but the auxiliary vectors ($a_k$) are discarded. After the encoder(s) ($\varepsilon_\theta$) are trained using auxiliary vectors, classifiers are trained and a specified number of labels having the relatively highest classifier score are identified. In some examples, classifier scores and label similarity scores are combined to make predictions (e.g., product-to-product recommendations, etc.). In the example of FIG. 1, a tensor product ($\odot$) is obtained using the augmented label embedding vector(s) 165, 170 and the vector representation(s) 130, 145. The resulting example classifier score(s) 175, 180 can be combined with label similarity scores to generate product-based predictions associated with the original input data point(s) and/or documents and labels (e.g., label $l$, label $m$, etc.). In particular, improved label embeddings result in more accurate overall predictions.

In some examples, DEXA can include two or more portions, such that a first portion uses shared auxiliary vectors as described above while a second portion provides individual correction terms to each label, as further described below. For example, DEXA can include the use of a correction term-based vector 182 ($\eta_l$, $\eta_m$) during training, in place of the auxiliary vector ($a_k$) 150. For example, a training dataset can be defined as $\mathcal{D} := \{\{x_i, y_i\}\}_{i=1}^{N}, \{z_l\}_{l=1}^{L}$, where $N$ is a number of documents, $L$ is a number of labels, $x_i$ is a textual representation for an $i^{th}$ document, $z_l$ is a textual representation for the $l^{th}$ label, and $y_i=\{0,1\}^L$ represents a relevance vector. When using correction terms, DEXA aims to learn the encoder ($\varepsilon_\theta$) and correction terms ($\eta_l$, $\eta_m$) by optimizing a triplet loss ($\mathcal{L}$), as shown in accordance with Equation 1:

$$\mathcal{L}(\theta, \phi, \{\eta_l\}_{i=1}^{L}) = \sum_i \sum_{l+} \sum_{l-}[\mathcal{F}_\phi(z_{l-}, \eta_{l-})^T \varepsilon_\theta(x_i) - \mathcal{F}_\phi(z_{l+}, \eta_{l+})^T \varepsilon_\theta(x_i) + \gamma]_+) \quad \text{Equation 1}$$

In the example of Equation 1, $\gamma$ represents a margin, whereas $\mathcal{F}_\phi(z_l, \eta_l) = \varepsilon_\theta(z_l) + \eta_l$ combines the text-based embedding and the correction term for a label $l$. In the example of Equation 1, $\mathcal{F}_\phi$ represents a function that receives two inputs, (1) the vector $\eta_l$ and (2) the sequence of vectors $z_l$, and outputs a single vector. For example, $\mathcal{F}_\phi$ internally maps $z_l$ to a single vector $\varepsilon_\theta(z_l)$ and sums $\eta_l$ so that the output of $\mathcal{F}_\phi$ is a single vector. In the example of FIG. 1, the encoder ($\varepsilon_\theta$) is a transformer-based architecture, such that a document representation can be computed based on the encoder, with a correction term added for the label side (e.g., correction term-based vector 182 ($\eta_l$, $\eta_m$)). In addition, a similarity is computed between the semantic representation of the document and an enhanced label representation for the label. In some examples, predictions are made based on a similarity between a document label pair (e.g., $\mathcal{F}_\phi(z)^T\varepsilon_\theta(x)$). In the example of FIG. 1, a pure Siamese architecture may be recovered by setting $\eta_l = 0$ when using the second DEXA portion that provides individual correction terms to each label. In examples disclosed herein, DEXA uses $K << L$ correction terms for efficiency (e.g., where $K$ represents auxiliary vectors and $L$ is the number of labels), such that one term may be shared by multiple labels.

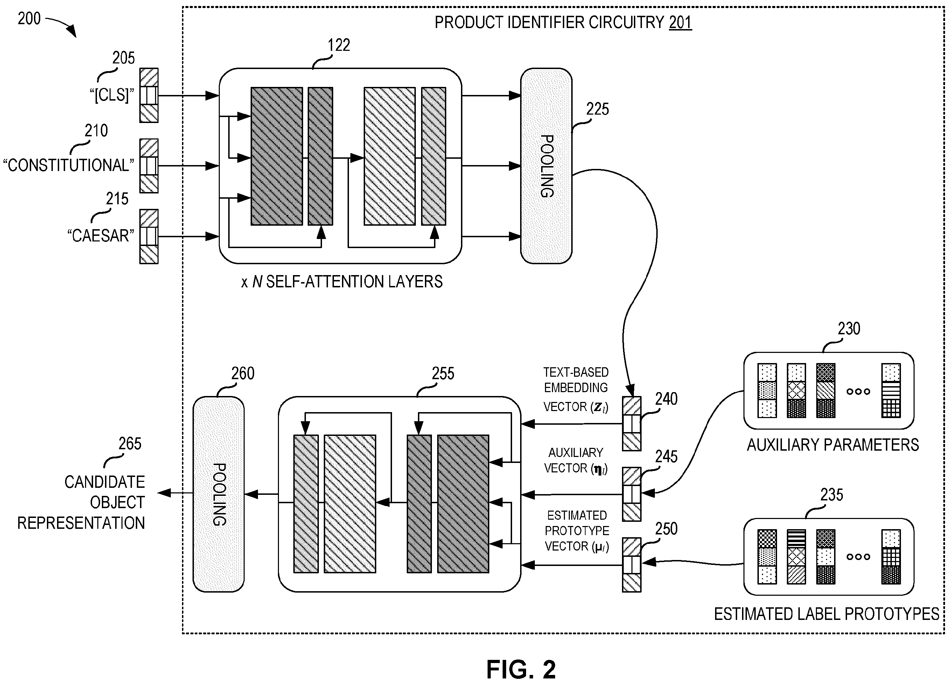

Although the DEXA-based approach of FIG. 1 to extreme classification can be used to generate product-to-product recommendations, methods and apparatus disclosed herein improve upon this architecture to include the use of label prototypes and a self-attention module, in addition to auxiliary parameters. As described in connection with FIG. 2, label representation is improved by utilizing relevant document information associated with an object of interest and/or a product of interest and fusing various sources of information (e.g., text-embedding information, auxiliary parameters, estimated prototypes, etc.) to obtain a final product representation.

FIG. 2 is an example of a second architecture 200 using the DEXA of FIG. 1, including estimated prototypes and a self-attention model for identifying a candidate product representation and/or a candidate object representation using example object identifier circuitry 201. For example, the object representation can include any type of representation and/or recommendation associated with the original input query (e.g., text-based query, subject query, etc.). In some examples, the object representation includes a product recommendation (e.g., consumer product, pharmaceutical product, etc.). In some examples, the object representation includes instructions (e.g., traffic equipment control instructions, etc.). For example, the object representation can include a product (e.g., book title) based on an original text-based query associated with a particular topic. In some examples, the object representation includes a type of medication to treat a medical condition associated with a text-based query of medical symptoms. In some examples, the object representation can include traffic equipment control instructions (e.g., to reduce traffic congestion, improve road crossing safety, etc.) based on traffic data inputs. However, any other type of recommendation can be associated with the object representation and is not limited to examples disclosed herein.

In the example of FIG. 2, the object identifier circuitry 201 receives text-based vector input(s) 205, 210, 215 from a relevant document (e.g., a document titled "Constitutional reforms of Julius Caesar"). In some examples, the text-based vector input(s) 205, 210, 215 pass through the first transformer-based neural network 122 (e.g., a self-attention module) that generates text-based embedding vector(s) that are pooled using pooling 225 to form a single text-based embedding vector 240 ($z_l$). In the example of FIG. 2, the object identifier circuitry 201 identifies object label representations such as auxiliary parameters 230 (e.g., auxiliary vectors such as the auxiliary vector 150 of FIG. 1) and estimated label prototypes 235 (e.g., estimated prototype vectors). For example, the auxiliary parameters 230 are learned by the transformer-based neural network during training, while the estimated label prototypes 235 encode query-based information associated with an object of interest and/or a product of interest (e.g., incorporating relevant document information). In the example of FIG. 2, a second transformer-based neural network 255 (e.g., a self-attention module combiner) receives the text-based embedding vector 240 ($z_l$), an auxiliary vector 245 ($\eta_l$) (e.g., from the auxiliary parameters 230), and an estimated prototype vector 250 ($\mu_l$) (e.g., from the estimated label prototypes 235). The second transformer-based neural network 255 (e.g., a self-attention module combiner) generates contextualized embeddings of the input vector(s) 240, 245, 250, then pools the contextualized embeddings using example pooling 260 to identify an example final candidate product representation 265, as described in more detail below.

In the example of FIG. 2, label representation is enhanced by aggregating information from relevant documents for each label. In examples disclosed herein, label prototypes are defined as $\mu_l = \aleph (\sum_{y_{il}=1} \hat{x}_l)$, where $\hat{x}_l$ is the embedding of $i^{th}$ document and $\aleph$ is a normalization operator defined as $\aleph(v) = v/\|v\|_2$. However, determining label prototypes is computationally expensive during training as the document embeddings are constantly being updated. For example, given a mini batch of size B, embeddings would need to be computed for a total of 2B items, whereas computing estimated prototypes would include determining the embeddings of an additional $Bk$ items, where $k$ is an average number of documents per label (e.g., ranging from 4-10 documents on a public dataset). As such, the DEXA architecture 200 would need to include a smaller batch-size B to account for the introduction of the estimated prototypes that are not present in the original DEXA (e.g., described in connection with FIG. 1), which would result in an adverse impact on performance. To avoid this impact on performance, the DEXA architecture 200 deploys an estimate of label prototypes as a rolling mean of documents instead of computing exact label prototypes for every mini batch. In particular, a centroid representing the estimated prototype is updated using

$$\mu_l^j = \alpha * \mu_l^{j-1} + (1 - \alpha) * \hat{x}_l^{\,j}$$

where $\mu^{j-1}$ is a centroid at a previous step, $\alpha$ is a hyperparameter, and $\hat{x}_l^j$ is the document representation at a $j^{th}$ step. As such, the improved DEXA architecture disclosed in connection with FIG. 2 incurs no additional computational overhead (e.g., in terms of graphics processing unit (GPU)-based memory). Additionally, because of efficiencies gained by the architecture of FIG. 2 and the rolling mean label prototype estimation techniques disclosed herein, computational resources may be employed that are less expensive, demand lower power requirements, and exhibit lower thermal emission. In some examples, readily available CPU computational resources may be employed rather than relatively more complex, more expensive and more energy demanding GPU computational resources.

In addition to introducing the use of estimated label prototypes 235, the second architecture 200 includes the first transformer-based neural network 122 (e.g., a self-attention module) and the second transformer-based neural network 255 (e.g., a self-attention module combiner). Self-attention corresponds to an attention mechanism relating different positions of a single sequence to compute a representation of a given sequence. Self-attention has been used in tasks such as reading comprehension, abstractive summarization, textual entailment, and learning task-independent sequence representations. For example, an attention function can be used for mapping a query and a set of key-value pairs to an output, where the query, keys, values, and output are all vectors. An output can be computed as a weighted sum of the values, where the weights are assigned to each value are computed by a compatibility function of the query with the corresponding key. A transformer-based neural network can include encoder-decoder self-attention layers, such that the encoder contains a self-attention layer including keys, values, and queries that originate from a previous layer in the encoder. In the example of FIG. 2, label representations (e.g., embedding vectors, estimated prototype vectors, auxiliary vectors) are enhanced by incorporating the second transformer-based neural network 255 in the second architecture 200 instead of a linear combination performed in connection with the first architecture 100. In examples disclosed herein, the different label representations are passed as a bag-of-embeddings to the second transformer-based neural network 255. For example, the second transformer-based neural network 255, represented as $g_\phi(z_l, \eta_l, \mu_l)$, computes the contextualized embeddings for each source of representation for labels (e.g., text-based embedding vector 240 ($z_l$), auxiliary vector 245 ($\eta_l$), estimated prototype vector 250 ($\mu_l$)) and combines the contextualized embeddings using the pooling operation 260 (e.g., using a mean pooler).

Furthermore, the incorporation of label prototype information and a self-attention module as part of the transformer-based neural network introduces that need for an updated loss function, because document and label representations are not suitable for similarity searches in the semantic space (e.g., $\varepsilon_\theta(z)^T \varepsilon_\theta(x)$). In examples disclosed herein, the second architecture 200 includes a modified loss function ($\mathcal{L}$) to ensure optimized for similarity in the semantic space in addition to the final space (e.g., $g_\phi(z)^T \varepsilon_\theta(x)$), as shown below in connection with Equation 2:

$$\mathcal{L}(\theta, \phi, \{\eta_l\}_{i=1}^L) = \sum_{l+} \sum_{l-} \beta \left[ g_\phi(z_{l-}, \eta_{l-}, \mu_{l-})^T \varepsilon_\theta(x_i) - g_\phi(z_{l+}, \eta_{l+}, \mu_{l+})^T \varepsilon_\theta(x_i) + \gamma \right]_+ +$$
$$(1 - \beta)[\varepsilon_\theta(z_{l-})^T \varepsilon_\theta(x_i) - \varepsilon_\theta(z_{l+})^T \varepsilon_\theta(x_i) + \gamma]_+) \qquad \text{Equation 2}$$

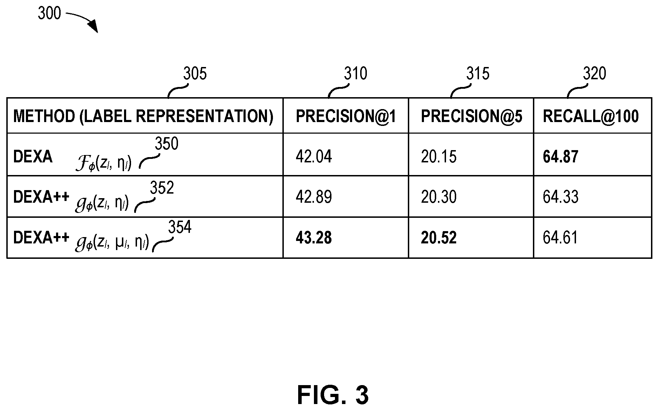

FIG. 3 is an example diagram 300 of a comparison of results obtained using the first architecture 100 of FIG. 1 and the second architecture 200 of FIG. 2. For example, FIG. 3 illustrates results associated with experiments conducted on a product-to-product recommendation dataset (e.g., LF-AmazonTitles-131K) using various architecture-based techniques 305. For example, the selected dataset can be used for extreme multi-label classification with a product space of 131,073 labels, 294,805 training points, and 134,835 test points for evaluation, such that there are several positive or relevant label products for a given query product. In this dataset, each query has an average of 2.29 relevant labels, while there are on average 5.15 queries for each label. FIG. 3 includes a comparison of results obtained using the DEXA-based first architecture 100 of FIG. 1 (see row 350) and the improved DEXA-based second architecture 200 of FIG. 2 (see row 354), including the use of the text-based embedding vector ($z_l$) and the auxiliary vector ($\eta_l$) only (e.g., $\mathcal{F}_\phi(z_l, \eta_l)$, $g_\phi(z_l, \eta_l)$) or the combined use of the text-based embedding vector ($z_l$), the auxiliary vector ($\eta_l$), and the estimated prototype vector 250 ($\mu_l$) (e.g., $g_\phi(z_l, \mu_l, \eta_l)$), as shown in the example listing of methods and label representations 305. In the example of FIG. 3, a 6-layer MiniLM architecture was used for obtaining experimental results 310, 315. The experimental results 310, 315 are reported using an extreme classification metric known as precision@k (e.g., precision@1, precision@5). Similarly, a recall@k is an example primary metric 320 for assessing matching of user queries to advertiser keywords (e.g., recall@100). In the example of FIG. 3, the second DEXA architecture 200 was 1.2% more accurate than the first DEXA architecture 100 in Precision@1. Results of FIG. 3 indicate that the incorporation of a centroid by the second architecture 200 (e.g., the label representation including the estimated prototype vector ($\mu_l$)), in addition to text-based embedding ($z_l$) and the auxiliary vector for a label ($\eta_l$), demonstrates that the presence of both the self-attention module and the incorporation of label prototypes contributes to the final performance of the second architecture 200 disclosed herein (e.g., such that results on precision@1 and precision@5 are highest when using the second architecture 200 with all three label representations included). In examples disclosed herein using the second architecture 200, semantic similarity between a document and labels is ensured even when the final predictions are made using enhanced label representations. Additionally, the second DEXA architecture 200 introduced herein does not incur any overhead in terms of prediction time.

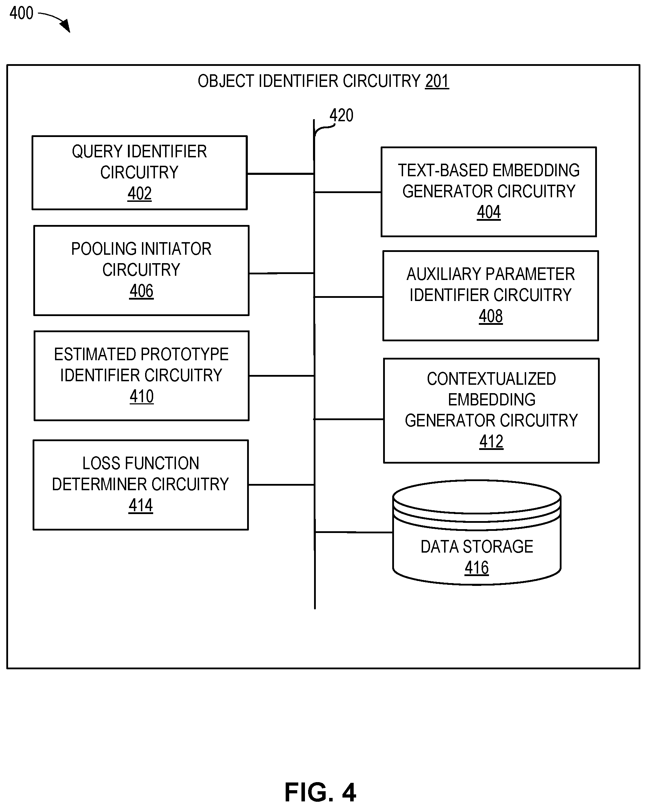

FIG. 4 is a block diagram 400 representative of the object identifier circuitry 201 of FIG. 2 that may be implemented for identifying a candidate product representation and/or a candidate object representation. The object identifier circuitry 201 of FIG. 2 may be instantiated (e.g., creating an instance of, bring into being for any length of time, materialize, implement, etc.) by programmable circuitry such as a Central Processing Unit (CPU) executing first instructions. Additionally or alternatively, the object identifier circuitry 201 of FIG. 2 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 4 may, thus, be instantiated at the same or different times. Some or all of the circuitry of FIG. 4 may be instantiated, for example, in one or more threads executing concurrently on hardware and/or in series on hardware.

Moreover, in some examples, some or all of the circuitry of FIG. 4 may be implemented by microprocessor circuitry executing instructions and/or FPGA circuitry performing operations to implement one or more virtual machines and/or containers.

In the example of FIG. 4, the object identifier circuitry 201 of FIG. 2 includes example query identifier circuitry 402, example text-based embedding generator circuitry 404, example pooling initiator circuitry 406, example auxiliary parameter identifier circuitry 408, example estimated prototype identifier circuitry 410, example contextualized embedding circuitry 412, example loss function determiner circuitry 414, and/or example data storage 416. In the example of FIG. 4, the query identifier circuitry 402, the text-based embedding generator circuitry 404, the pooling initiator circuitry 406, the auxiliary parameter identifier circuitry 408, the estimated prototype identifier circuitry 410, the contextualized embedding circuitry 412, and the loss function determiner circuitry 414 are in communication via an example bus 420.

The query identifier circuitry 402 identifies a text-based input query associated with a product of interest and/or an object of interest. For example, the query identifier circuitry 402 identifies a text-based description of a query product as part of the second architecture 200 used to suggest related objects and/or products (e.g., from an existing database). In some examples, the text-based description can be derived from a given document (e.g., a document titled "Constitutional reforms of Julius Caesar"), which the second architecture 200 uses to predict related works (e.g., "Acta Senatus") that are relevant to the input text-based description identified using the query identifier circuitry 402. In the example of FIG. 2, the query identifier circuitry 402 identifies the text-based inputs such as "Constitutional" and "Caeser". However, the query identifier circuitry 402 can determine text-based input associated with any type of query (e.g., query related to specific products). In the example of FIG. 1, the query identifier circuitry 402 identifies a data point, document, and/or label. In some examples, the query identifier circuitry 402 identifies inputs (e.g., objects, text objects, sentence objects, etc.) related to any type of information (e.g., patient symptom data, traffic data, consumer data, etc.) that can be used to generate a recommendation (e.g., medication to treat patient symptoms, instructions to reduce traffic congestion, dispatching of a product from a warehouse, etc.).

The text-based embedding generator circuitry 404 generates a text-based embedding of the input query. For example, embedding involves the conversion of high-dimensional data (e.g., text, images, etc.) into lower-dimensional representations while preserving the structure of the original input data (e.g., input query). In the example of FIG. 2, the text-based embedding generator circuitry 404 uses the first transformer-based neural network 122 (e.g., a self-attention module) to generate text-based embedding vector(s) for pooling (e.g., using pooling initiator circuitry 406). For example, the text-based embedding generator circuitry 404 generates text-based embedding vector(s) based on the text-based vector input(s) 205, 210, 215 of FIG. 2. In some examples, the text-based embedding generator circuitry 404 also generates the augmented label embedding vector(s) 165, 170 (e.g., $\hat{z}_l$, $\hat{z}_m$) (e.g., text-embedding vectors).

The pooling initiator circuitry 406 pools text-based embedding vector(s) generated by the text-based embedding generator circuitry 404 to form a single text-based embedding vector ($z_l$) (e.g., text-based embedding vector 240 of FIG. 2). In some examples, the pooling initiator circuitry 406 pools contextualized embeddings to identify a product representation and/or an object representation. In the example of FIG. 2, the pooling initiator circuitry 406 pools the contextualized embeddings of the input vector(s) 240, 245, 250 (e.g., text-based embedding vector ($z_l$), auxiliary vector ($\eta_l$), and estimated prototype vector ($\mu_l$)) generated using the second transformer-based neural network 255. In examples disclosed herein, the pooling initiator circuitry 406 performs mean-based pooling (e.g., average pooling to obtain an average of the input vectors). For example, the pooling 225 of FIG. 2 obtains an average of the text-based embedding vector(s) and the pooling 260 of FIG. 2 obtains an average of vectors with contextualized embeddings.

The auxiliary parameter identifier circuitry 408 identifies auxiliary parameters (e.g., auxiliary parameters 230 of FIG. 2). For example, the auxiliary parameter identifier circuitry 408 determines auxiliary parameters that are learned during training when using a transformer-based neural network (e.g., transformer-based neural networks 122, 255 of FIG. 2). In the example of FIG. 2, the auxiliary parameters 230 include auxiliary vectors ($\eta_l$). In some examples, the auxiliary parameter identifier circuitry 408 uses $K$ auxiliary vectors $A \overset{\text{def}}{=} \{a_k\}_{k \in [K]}$ (e.g., where $a_k \in \mathbb{R}^D$) to train encoder(s) of the first and/or second architecture(s) 100, 200 of FIGS. 1 and/or 2.

The estimated prototype identifier circuitry 410 identifies estimated label prototypes. For example, the estimated label prototypes (e.g., estimated label prototypes 235 of FIG. 2) encode query-based information associated with a product of interest and/or an object of interest. In some examples, the estimated prototype identifier circuitry 410 deploys an estimate of label prototypes as a rolling average calculation of documents (e.g., instead of computing exact label prototypes for every mini batch). In some examples, the estimated prototype identifier circuitry 410 updates a centroid representing the estimated prototype using $\mu_l^j = \alpha * \mu_l^{j-1} + (1 - \alpha) * \hat{x}_l^{\,j}$, where $\mu^{j-1}$ is a centroid at a previous step, $\alpha$ is a hyperparameter, and $\hat{x}_l^{\,j}$ is the document representation at a $j^{th}$ step, as previously described in connection with FIG. 2.

The contextualized embedding circuitry 412 performs contextualized embedding of received input vectors. For example, the contextualized embedding circuitry 412 performs contextualized embedding of input vector(s) 240, 245, 250 of FIG. 2 (e.g., the text-based embedding vector 240 ($z_l$), the auxiliary vector 245 ($\eta_l$), and the estimated prototype vector 250 ($\mu_l$)). In some examples, the contextualized embedding circuitry 412 performs contextualized embeddings to generate vectors that reflect the different meanings implied by the context of a particular input. For example, a particular word use (e.g., syntax and semantics) depends on context, such that multiple representations for each word can be generated. As such, a vector can be generated for each word conditioned on the word's context (e.g., if the word "play" acts as a source, the nearest neighbors can include "playing", "game", "players", etc.).

The loss function determiner circuitry 414 identifies a loss function to apply during training to identify differences between predicted outputs and target outputs. In the example of the second DEXA algorithm 200 of FIG. 2, the loss function determiner circuitry 414 identifies a modified loss function ($\mathcal{L}$) for optimizing similarity in the semantic space and the final space to ensure that document and label representations are suitable for similarity searches in the semantic space, as described in more detail in connection with FIG. 2. For example, a vector for a specific word can include an element reflecting the number of times that specific word was found within a given range of words in the corpus, such that these words can be viewed as coordinates of points in a high-dimensional semantic space (e.g., where the semantic space corresponds to representations of natural language that are capable of capturing meaning).

The data storage 416 can be used to store any information associated with the query identifier circuitry 402, the text-based embedding generator circuitry 404, the pooling initiator circuitry 406, the auxiliary parameter identifier circuitry 408, the estimated prototype identifier circuitry 410, the contextualized embedding circuitry 412, and/or the loss function determiner circuitry 414. The example data storage 416 of the illustrated example of FIG. 4 can be implemented by any memory, storage device and/or storage disc for storing data such as flash memory, magnetic media, optical media, etc. Furthermore, the data stored in the example data storage 416 can be in any data format such as binary data, comma delimited data, tab delimited data, structured query language (SQL) structures, image data, etc.

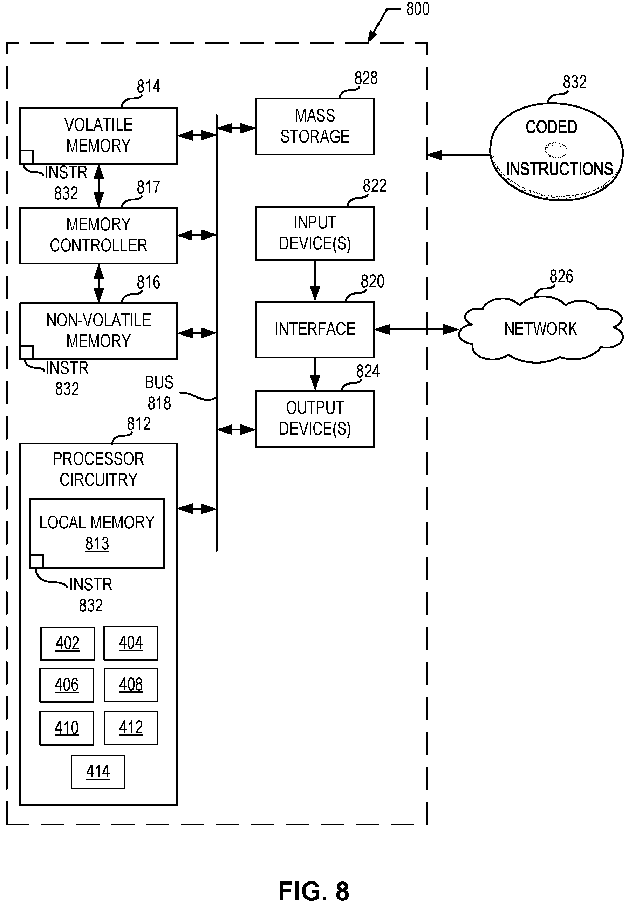

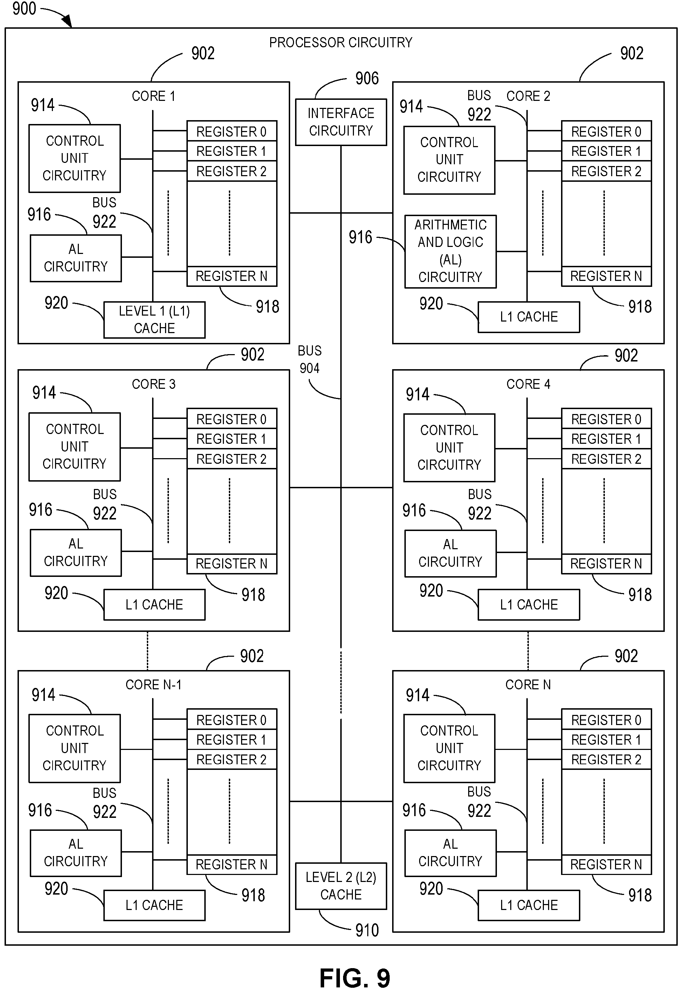

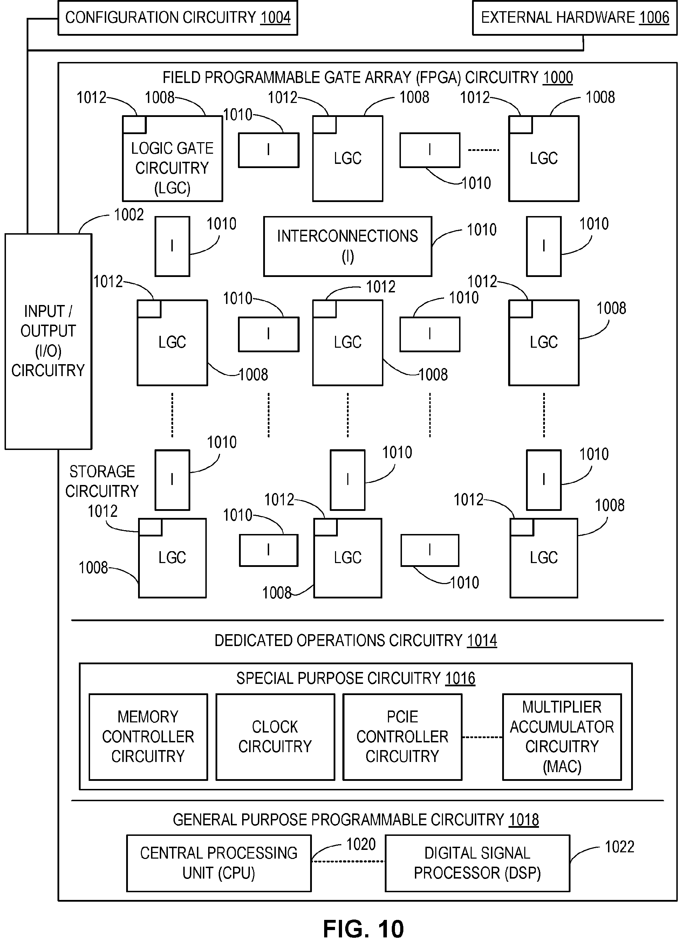

In some examples, the apparatus includes means for identifying a query. For example, the means for identifying a query may be implemented by query identifier circuitry 402. In some examples, the query identifier circuitry 402 may be instantiated by programmable circuitry such as the example programmable circuitry 812 of FIG. 8. For instance, the query identifier circuitry 402 may be instantiated by the example microprocessor 900 of FIG. 9 executing machine executable instructions such as those implemented by at least block 505 of FIG. 5. In some examples, the query identifier circuitry 402 may be instantiated by hardware logic circuitry, which may be implemented by an ASIC, XPU, or the FPGA circuitry 1000 of FIG. 10 structured to perform operations corresponding to the machine readable instructions. Additionally or alternatively, the query identifier circuitry 402 may be instantiated by any other combination of hardware, software, and/or firmware. For example, the query identifier circuitry 402 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) structured to execute some or all of the machine readable instructions and/or to perform some or all of the operations corresponding to the machine readable instructions without executing software or firmware, but other structures are likewise appropriate.

In some examples, the apparatus includes means for generating a text-based embedding. For example, the means for generating a text-based embedding may be implemented by text-based embedding generator circuitry 404. In some examples, the text-based embedding generator circuitry 404 may be instantiated by programmable circuitry such as the example programmable circuitry 812 of FIG. 8. For instance, the text-based embedding generator circuitry 404 may be instantiated by the example microprocessor 900 of FIG. 9 executing machine executable instructions such as those implemented by at least block 510 of FIG. 5. In some examples, the text-based embedding generator circuitry 404 may be instantiated by hardware logic circuitry, which may be implemented by an ASIC, XPU, or the FPGA circuitry 1000 of FIG. 10 structured to perform operations corresponding to the machine readable instructions. Additionally or alternatively, the text-based embedding generator circuitry 404 may be instantiated by any other combination of hardware, software, and/or firmware. For example, the text-based embedding generator circuitry 404 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) structured to execute some or all of the machine readable instructions and/or to perform some or all of the operations corresponding to the machine readable instructions without executing software or firmware, but other structures are likewise appropriate.

In some examples, the apparatus includes means for pooling. For example, the means for pooling may be implemented by pooling initiator circuitry 406. In some examples, the pooling initiator circuitry 406 may be instantiated by programmable circuitry such as the example programmable circuitry 812 of FIG. 8. For instance, the pooling initiator circuitry 406 may be instantiated by the example microprocessor 900 of FIG. 9 executing machine executable instructions such as those implemented by at least block 515 of FIG. 5. In some examples, the pooling initiator circuitry 406 may be instantiated by hardware logic circuitry, which may be implemented by an ASIC, XPU, or the FPGA circuitry 1000 of FIG. 10 structured to perform operations corresponding to the machine readable instructions. Additionally or alternatively, the pooling initiator circuitry 406 may be instantiated by any other combination of hardware, software, and/or firmware. For example, the pooling initiator circuitry 406 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) structured to execute some or all of the machine readable instructions and/or to perform some or all of the operations corresponding to the machine readable instructions without executing software or firmware, but other structures are likewise appropriate.

In some examples, the apparatus includes means for identifying an auxiliary parameter. For example, the means for identifying an auxiliary parameter may be implemented by auxiliary parameter identifier circuitry 408. In some examples, the auxiliary parameter identifier circuitry 408 may be instantiated by programmable circuitry such as the example programmable circuitry 812 of FIG. 8. For instance, the auxiliary parameter identifier circuitry 408 may be instantiated by the example microprocessor 900 of FIG. 9 executing machine executable instructions such as those implemented by at least block 525 of FIG. 5. In some examples, the auxiliary parameter identifier circuitry 408 may be instantiated by hardware logic circuitry, which may be implemented by an ASIC, XPU, or the FPGA circuitry 1000 of FIG. 10 structured to perform operations corresponding to the machine readable instructions. Additionally or alternatively, the auxiliary parameter identifier circuitry 408 may be instantiated by any other combination of hardware, software, and/or firmware. For example, the auxiliary parameter identifier circuitry 408 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) structured to execute some or all of the machine readable instructions and/or to perform some or all of the operations corresponding to the machine readable instructions without executing software or firmware, but other structures are likewise appropriate.

In some examples, the apparatus includes means for identifying an estimated label prototype. For example, the means for identifying an estimated label prototype may be implemented by estimated prototype identifier circuitry 410. In some examples, the estimated prototype identifier circuitry 410 may be instantiated by programmable circuitry such as the example programmable circuitry 812 of FIG. 8. For instance, the estimated prototype identifier circuitry 410 may be instantiated by the example microprocessor 900 of FIG. 9 executing machine executable instructions such as those implemented by at least block 530 of FIG. 5. In some examples, the estimated prototype identifier circuitry 410 may be instantiated by hardware logic circuitry, which may be implemented by an ASIC, XPU, or the FPGA circuitry 1000 of FIG. 10 structured to perform operations corresponding to the machine readable instructions. Additionally or alternatively, the estimated prototype identifier circuitry 410 may be instantiated by any other combination of hardware, software, and/or firmware. For example, the estimated prototype identifier circuitry 410 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) structured to execute some or all of the machine readable instructions and/or to perform some or all of the operations corresponding to the machine readable instructions without executing software or firmware, but other structures are likewise appropriate.

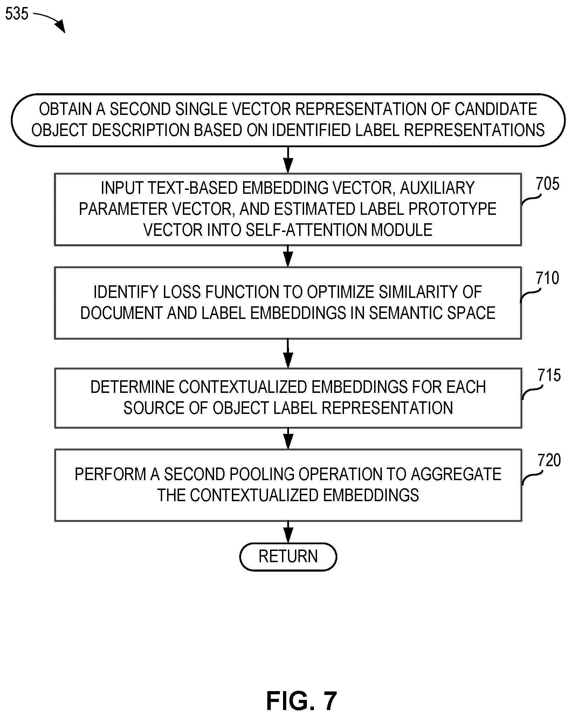

In some examples, the apparatus includes means for generating a contextualized embedding. For example, the means for generating a contextualized embedding may be implemented by contextualized embedding generator circuitry 412. In some examples, the contextualized embedding generator circuitry 412 may be instantiated by programmable circuitry such as the example programmable circuitry 812 of FIG. 8. For instance, the contextualized embedding generator circuitry 412 may be instantiated by the example microprocessor 900 of FIG. 9 executing machine executable instructions such as those implemented by at least block 705 of FIG. 7. In some examples, the contextualized embedding generator circuitry 412 may be instantiated by hardware logic circuitry, which may be implemented by an ASIC, XPU, or the FPGA circuitry 1000 of FIG. 10 structured to perform operations corresponding to the machine readable instructions. Additionally or alternatively, the contextualized embedding generator circuitry 412 may be instantiated by any other combination of hardware, software, and/or firmware. For example, the contextualized embedding generator circuitry 412 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) structured to execute some or all of the machine readable instructions and/or to perform some or all of the operations corresponding to the machine readable instructions without executing software or firmware, but other structures are likewise appropriate.

In some examples, the apparatus includes means for determining a loss function. For example, the means for determining a loss function may be implemented by loss function determiner circuitry 414. In some examples, the loss function determiner circuitry 414 may be instantiated by programmable circuitry such as the example programmable circuitry 812 of FIG. 8. For instance, the loss function determiner circuitry 414 may be instantiated by the example microprocessor 900 of FIG. 9 executing machine executable instructions such as those implemented by at least block 710 of FIG. 7. In some examples, the loss function determiner circuitry 414 may be instantiated by hardware logic circuitry, which may be implemented by an ASIC, XPU, or the FPGA circuitry 1000 of FIG. 10 structured to perform operations corresponding to the machine readable instructions. Additionally or alternatively, the loss function determiner circuitry 414 may be instantiated by any other combination of hardware, software, and/or firmware. For example, the loss function determiner circuitry 414 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) structured to execute some or all of the machine readable instructions and/or to perform some or all of the operations corresponding to the machine readable instructions without executing software or firmware, but other structures are likewise appropriate.

While an example manner of implementing the object identifier circuitry 201 of FIG. 2 is illustrated in FIG. 4, one or more of the elements, processes and/or devices illustrated in FIG. 4 may be combined, divided, re-arranged, omitted, eliminated and/or implemented in any other way. Further, the example query identifier circuitry 402, example text-based embedding generator circuitry 404, example pooling initiator circuitry 406, example auxiliary parameter identifier circuitry 408, example estimated prototype identifier circuitry 410, example contextualized embedding circuitry 412, example loss function determiner circuitry 414, and/or, more generally, the example object identifier circuitry 201 of FIG. 2 may be implemented by hardware, software, firmware and/or any combination of hardware, software and/or firmware. Thus, for example, any of the example query identifier circuitry 402, example text-based embedding generator circuitry 404, example pooling initiator circuitry 406, example auxiliary parameter identifier circuitry 408, example estimated prototype identifier circuitry 410, example contextualized embedding circuitry 412, example loss function determiner circuitry 414, and/or, more generally, the example object identifier circuitry 201 of FIG. 2 could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s), ASIC(s)), programmable logic device(s) (PLD(s)), and/or field programmable logic device(s) (FPLD(s)) such as FPGAs. Further still, the object identifier circuitry 201 of FIG. 2 may include one or more elements, processes, and/or devices in addition to, or instead of, those illustrated in FIG. 4, and/or may include more than one of any or all of the illustrated elements, processes and devices.

Flowcharts representative of example machine readable instructions, which may be executed by programmable circuitry to implement and/or instantiate the object identifier circuitry 201 of FIG. 2 and/or representative of example operations which may be performed by programmable circuitry to implement and/or instantiate the object identifier circuitry 201 of FIG. 2, are shown in FIGS. 5-7. The machine readable instructions may be one or more executable programs or portion(s) of one or more executable programs for execution by programmable circuitry, such as the programmable circuitry 812 shown in the example processor platform 800 discussed below in connection with FIG. 8 and/or may be one or more function(s) or portion(s) of functions to be performed by the example programmable circuitry (e.g., an FPGA) discussed below in connection with FIGS. 9 and/or 10. In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowcharts illustrated in FIGS. 5-7, many other methods of implementing the example object identifier circuitry 201 of FIG. 2 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 5-7 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, and/or activities, the phrase "at least one of A and B" is intended to refer to implementations including any of (1) at least one A, (2) at least one B, or (3) at least one A and at least one B. Similarly, as used herein in the context of describing the performance or execution of processes, instructions, actions, and/or activities, the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

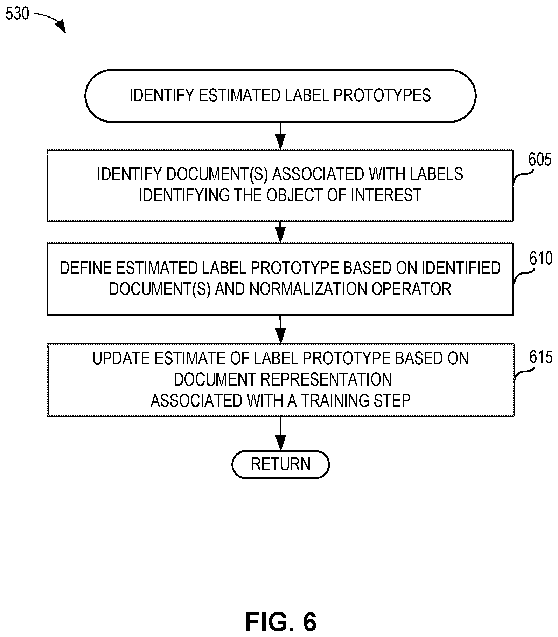

FIG. 5 is a flowchart representative of example machine readable instructions and/or example operations 500 that may be executed, instantiated, and/or performed by programmable circuitry to implement the example object identifier circuitry 201 of FIG. 2. The machine readable instructions and/or the operations 500 of FIG. 5 begin at block 505, at which the query identifier circuitry 402 identifies text-based input queries associated with a product of interest, an object of interest, and/or a topic of interest. For example, an object of interest can correspond to any type of product and/or output of interest (e.g., code block, data structure, diseased cell mutation identification, etc.), and is not limited to the product-based examples disclosed herein. As previously described in connection with FIG. 2, the text-based input queries can include text derived from a relevant document. The text-based embedding generator circuitry 404 determines vector representations of the text-based input queries (e.g., identified using the query identifier circuitry 402) using a transformer-based neural network, at block 510. For example, vector representations of the text-based input queries (e.g., text-based embedding vectors) can be determined using a self-attention module, as described in connection with FIG. 2. The pooling initiator circuitry 406 performs a first pooling operation to average the text-based embedding vectors determined using the transformer-based neural network, at block 515. As a result of the vector averaging (e.g., using mean pooling), the pooling initiator circuitry 406 generates a first single vector representation (e.g., of the candidate product description), at block 520. For example, the pooling initiator circuitry 406 outputs the text-based embedding vector ($z_l$) 240 of FIG. 2. In some examples, the text-based embedding vector ($z_l$) 240 is a contextualized embedding of the input vector(s) 205, 210, 215 of FIG. 2. In addition to the text-based embedding vector ($z_l$), the auxiliary parameter identifier circuitry 408 identifies auxiliary parameters, at block 525. In some examples, auxiliary parameters are used to improve encoder training such that label representations are not constrained by label text alone. In some examples, the auxiliary parameters can be learned by the transformer-based neural network during training. In addition to auxiliary parameters, the estimated prototype identifier circuitry 410 identifies estimated label prototypes, at block 530. As described in more detail in connection with FIG. 6, the estimated prototype identifier circuitry 410 identifies estimated label prototypes based on relevant documents and/or relevant information associated with the product of interest, the object of interest, and/or the topic of interest. In total, three label representations are identified: a text-based embedding vector ($z_l$) (e.g., a first source of object label representation originating from the text-based query inputs), an auxiliary vector ($\eta_l$) (e.g., a second source of object label representation originating from the auxiliary parameters), and an estimated prototype vector ($\mu_l$) (e.g., a third source of object label representation originating from the estimated label prototypes). The contextualized embedding circuitry 412 obtains a second vector representation (e.g., of the candidate product description) based on the identified label representations, at block 535, as described in more detail in connection with FIG. 7. The contextualized embedding circuitry 412 outputs a final recommendation (e.g., representation of candidate product) associated with the original input text-based query received by the query identifier circuitry 402, at block 540.

For example, the contextualized embedding circuitry 412 outputs a recommendation (e.g., related to identification of a product of interest, identification of medications for treatment of a symptom or chronic condition, identification of traffic control instructions to reduce traffic congestion, etc.) associated with the original input query (e.g., text-based object, sentence object, etc.) relating to particular information (e.g., patient symptom data, traffic data, consumer products data, etc.). In examples disclosed herein, the object identifier circuitry 201 can initiate an action related to the generated recommendation (e.g., initiate dispatch of a physical object from a storage warehouse to a consumer residence, initiate shipment of a medication from a pharmacy to a hospital, etc.). In some examples, the object identifier circuitry 201 transmits the candidate object representation(s) 265 of FIG. 1 to a destination (e.g., transmits medication recommendation data to a pharmacy, transmits product recommendation data to a warehouse, etc.). In some examples, the object identifier circuitry 201 causes the candidate object representation(s) 265 of FIG. 1 to move from a first location to a second location (e.g., causes traffic control instructions to move from a first server to a second server and/or a first traffic control station to a second traffic control station, etc.).

FIG. 6 is a flowchart representative of example machine readable instructions and/or example operations 530 that may be executed, instantiated, and/or performed by programmable circuitry to implement the example object identifier circuitry 201 of FIG. 2 to identify estimated label prototypes. The machine readable instructions and/or the operations 530 of FIG. 6 begin at block 605, at which the estimated prototype identifier circuitry 410 identifies relevant document(s) associated with labels identifying the product of interest and/or the topic of interest. In some examples, the document(s) can include information related to the product and/or topic of interest identified using a text-based query. The estimated prototype identifier circuitry 410 defines the estimated label prototypes based on embedded document(s) and a normalization operator, at block 610, as further described in connection with FIG. 2. In some examples, the estimated prototype identifier circuitry 410 updates the estimate of label prototypes based on a document representation associated with a given training step, at block 615. As described in connection with FIG. 2, the second architecture 200 deploys an estimate of label prototypes as a rolling average of documents to reduce the computational burden (e.g., instead of computing exact label prototypes for every mini batch). In some examples, the estimated prototype identifier circuitry 410 defines the estimated label prototype as a centroid ( $\mu_l^j$ ) associated with a document representation at a $j^{th}$ step of the training process.

FIG. 7 is a flowchart representative of example machine readable instructions and/or example operations 535 that may be executed, instantiated, and/or performed by programmable circuitry to implement the example object identifier circuitry 201 of FIG. 2 to obtain a second single vector representation of a candidate product description and/or candidate object description based on identified label representations. The machine readable instructions and/or the operations 535 of FIG. 7 begin at block 705, at which the contextualized embedding circuitry 412 inputs the product label representations (e.g., text-based embedding vector ($z_l$), auxiliary vector ($\eta_l$), and estimated prototype vector ($\mu_l$)) into the transformer-based neural network (e.g., the second transformer-based neural network 255 of FIG. 2). In some examples, the loss function determiner circuitry 414 identifies a loss function to optimize similarity of document and label embeddings in the semantic space, at block 710, as described in connection with FIGS. 2 and/or 4. The contextualized embedding circuitry 412 determines contextualized embeddings for each source of the three sources of product label representation, at block 715. Subsequently, the pooling initiator circuitry 406 performs a second pooling operation to aggregate the contextualized embeddings, at block 720.

FIG. 8 is a block diagram of an example programmable circuitry platform 800 structured to execute and/or instantiate the example machine-readable instructions and/or the example operations of FIGS. 5-7 to implement the example object identifier circuitry 201 of FIG. 2. The programmable circuitry platform 800 can be, for example, a server, a personal computer, a workstation, a self-learning machine (e.g., a neural network), a mobile device (e.g., a cell phone, a smart phone, a tablet such as an iPad™), a personal digital assistant (PDA), an Internet appliance, a DVD player, a CD player, a digital video recorder, a Blu-ray player, a gaming console, a personal video recorder, a set top box, a headset (e.g., an augmented reality (AR) headset, a virtual reality (VR) headset, etc.) or other wearable device, or any other type of computing and/or electronic device.

The programmable circuitry platform 800 of the illustrated example includes programmable circuitry 812. The programmable circuitry 812 of the illustrated example is hardware. For example, the programmable circuitry 812 can be implemented by one or more integrated circuits, logic circuits, FPGAs microprocessors, CPUs, GPUs, DSPs, and/or microcontrollers from any desired family or manufacturer. The programmable circuitry 812 may be implemented by one or more semiconductor based (e.g., silicon based) devices. In this example, the processor circuitry 812 implements the query identifier circuitry 402, text-based embedding generator circuitry 404, pooling initiator circuitry 406, auxiliary parameter identifier circuitry 408, estimated prototype identifier circuitry 410, contextualized embedding circuitry 412, and loss function determiner circuitry 414.

The programmable circuitry 812 of the illustrated example includes a local memory 813 (e.g., a cache, registers, etc.). The programmable circuitry 812 of the illustrated example is in communication with a main memory including a volatile memory 814 and a non-volatile memory 816 by a bus 818. The volatile memory 814 may be implemented by Synchronous Dynamic Random Access Memory (SDRAM), Dynamic Random Access Memory (DRAM), RAMBUS® Dynamic Random Access Memory (RDRAM®), and/or any other type of RAM device. The non-volatile memory 816 may be implemented by flash memory and/or any other desired type of memory device. Access to the main memory 814, 816 of the illustrated example is controlled by a memory controller 817. In some examples, the memory controller 817 may be implemented by one or more integrated circuits, logic circuits, microcontrollers from any desired family or manufacturer, or any other type of circuitry to manage the flow of data going to and from the main memory 814, 816.

The programmable circuitry platform 800 of the illustrated example also includes interface circuitry 820. The interface circuitry 820 may be implemented by hardware in accordance with any type of interface standard, such as an Ethernet interface, a universal serial bus (USB) interface, a Bluetooth® interface, a near field communication (NFC) interface, a Peripheral Component Interconnect (PCI) interface, and/or a Peripheral Component Interconnect Express (PCIe) interface.

In the illustrated example, one or more input devices 822 are connected to the interface circuitry 820. The input device(s) 822 permit(s) a user (e.g., a human user, a machine user, etc.) to enter data and/or commands into the programmable circuitry 812. The input device(s) 822 can be implemented by, for example, an audio sensor, a microphone, a camera (still or video), a keyboard, a button, a mouse, a touchscreen, a track-pad, a trackball, an isopoint device, and/or a voice recognition system.

One or more output devices 824 are also connected to the interface circuitry 820 of the illustrated example. The output devices 824 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 820 of the illustrated example, thus, typically includes a graphics driver card, a graphics driver chip, and/or graphics processor circuitry such as a GPU.

The interface circuitry 820 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 826. The communication can be by, for example, an Ethernet connection, a digital subscriber line (DSL) connection, a telephone line connection, a coaxial cable system, a satellite system, a line-of-site wireless system, a cellular telephone system, an optical connection, etc.

The programmable circuitry platform 800 of the illustrated example also includes one or more mass storage devices 828 to store software and/or data. Examples of such mass storage devices 828 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine executable instructions 832, which may be implemented by the machine readable instructions of FIGS. 5-7, may be stored in the mass storage device 828, in the volatile memory 814, in the non-volatile memory 816, and/or on at least one non-transitory computer readable storage medium such as a CD or DVD which may be removable.

FIG. 9 is a block diagram of an example implementation of the programmable circuitry 812 of FIG. 8. In this example, the programmable circuitry 812 of FIG. 8 is implemented by a microprocessor 900. For example, the microprocessor 900 may be a general purpose microprocessor (e.g., general purpose microprocessor circuitry). The microprocessor 900 executes some or all of the machine readable instructions of the flowcharts of FIGS. 5-7 to effectively instantiate the circuitry of FIG. 5 logic circuits to perform the operations corresponding to those machine readable instructions. In some such examples, the circuitry of FIG. 5 is instantiated by the hardware circuits of the microprocessor 900 in combination with the instructions. For example, the microprocessor 900 may implement multi-core hardware circuitry such as a CPU, a DSP, a GPU, an XPU, etc. Although it may include any number of example cores 902 (e.g., 1 core), the microprocessor 900 of this example is a multi-core semiconductor device including N cores. The cores 902 of the microprocessor 900 may operate independently or may cooperate to execute machine readable instructions. For example, machine code corresponding to a firmware program, an embedded software program, or a software program may be executed by one of the cores 902 or may be executed by multiple ones of the cores 902 at the same or different times. In some examples, the machine code corresponding to the firmware program, the embedded software program, or the software program is split into threads and executed in parallel by two or more of the cores 902. The software program may correspond to a portion or all of the machine readable instructions and/or operations represented by the flowcharts of FIGS. 5-7.

The cores 902 may communicate by a first example bus 904. In some examples, the first bus 904 may implement a communication bus to effectuate communication associated with one(s) of the cores 902. For example, the first bus 904 may implement at least one of an Inter-Integrated Circuit (I2C) bus, a Serial Peripheral Interface (SPI) bus, a PCI bus, or a PCIe bus. Additionally or alternatively, the first bus 904 may implement any other type of computing or electrical bus. The cores 902 may obtain data, instructions, and/or signals from one or more external devices by example interface circuitry 906. The cores 902 may output data, instructions, and/or signals to the one or more external devices by the interface circuitry 906. Although the cores 902 of this example include example local memory 920 (e.g., Level 1 (L1) cache that may be split into an L1 data cache and an L1 instruction cache), the microprocessor 900 also includes example shared memory 910 that may be shared by the cores (e.g., Level 2 (L2_cache)) for highspeed access to data and/or instructions. Data and/or instructions may be transferred (e.g., shared) by writing to and/or reading from the shared memory 910. The local memory 920 of each of the cores 902 and the shared memory 910 may be part of a hierarchy of storage devices including multiple levels of cache memory and the main memory (e.g., the main memory 814, 816 of FIG. 8). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 902 may be referred to as a CPU, DSP, GPU, etc., or any other type of hardware circuitry. Each core 902 includes control unit circuitry 914, arithmetic and logic (AL) circuitry (sometimes referred to as an ALU) 916, a plurality of registers 918, the L1 cache 920, and a second example bus 922. Other structures may be present. For example, each core 902 may include vector unit circuitry, single instruction multiple data (SIMD) unit circuitry, load/store unit (LSU) circuitry, branch/jump unit circuitry, floating-point unit (FPU) circuitry, etc. The control unit circuitry 914 includes semiconductor-based circuits structured to control (e.g., coordinate) data movement within the corresponding core 902. The AL circuitry 916 includes semiconductor-based circuits structured to perform one or more mathematic and/or logic operations on the data within the corresponding core 902. The AL circuitry 916 of some examples performs integer-based operations. In other examples, the AL circuitry 916 also performs floating-point operations. In yet other examples, the AL circuitry 916 may include first AL circuitry that performs integer-based operations and second AL circuitry that performs floating point operations. In some examples, the AL circuitry 916 may be referred to as an Arithmetic Logic Unit (ALU).

The registers 918 are semiconductor-based structures to store data and/or instructions such as results of one or more of the operations performed by the AL circuitry 916 of the corresponding core 902. For example, the registers 918 may include vector register(s), SIMD register(s), general purpose register(s), flag register(s), segment register(s), machine specific register(s), instruction pointer register(s), control register(s), debug register(s), memory management register(s), machine check register(s), etc. The registers 918 may be arranged in a bank as shown in FIG. 9. Alternatively, the registers 918 may be organized in any other arrangement, format, or structure including distributed throughout the core 902 to shorten access time. The second bus 922 may be implemented by at least one of an I2C bus, a SPI bus, a PCI bus, or a PCIe bus.

Each core 902 and/or, more generally, the microprocessor 900 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 900 is a semiconductor device fabricated to include many transistors interconnected to implement the structures described above in one or more integrated circuits (ICs) contained in one or more packages.

The microprocessor 900 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 900, in the same chip package as the microprocessor 900 and/or in one or more separate packages from the microprocessor 900.

FIG. 10 is a block diagram of another example implementation of the programmable circuitry of FIG. 8. In this example, the programmable circuitry 812 is implemented by FPGA circuitry 1000. For example, the FPGA circuitry 1000 may be implemented by an FPGA. The FPGA circuitry 1000 can be used, for example, to perform operations that could otherwise be performed by the example microprocessor 900 of FIG. 9 executing corresponding machine readable instructions. However, once configured, the FPGA circuitry 1000 instantiates the operations and/or functions corresponding to the machine readable instructions in hardware and, thus, can often execute the operations/functions faster than they could be performed by a general-purpose microprocessor executing the corresponding software.

More specifically, in contrast to the microprocessor 900 of FIG. 9 described above (which is a general purpose device that may be programmed to execute some or all of the machine readable instructions represented by the flowcharts of FIGS. 5-7 but whose interconnections and logic circuitry are fixed once fabricated), the FPGA circuitry 1000 of the example of FIG. 10 includes interconnections and logic circuitry that may be configured, structured, programmed, and/or interconnected in different ways after fabrication to instantiate, for example, some or all of the operations/functions corresponding to the machine readable instructions represented by the flowcharts of FIGS. 5-7. In particular, the FPGA 1000 may be thought of as an array of logic gates, interconnections, and switches. The switches can be programmed to change how the logic gates are interconnected by the interconnections, effectively forming one or more dedicated logic circuits (unless and until the FPGA circuitry 1000 is reprogrammed). The configured logic circuits enable the logic gates to cooperate in different ways to perform different operations on data received by input circuitry. Those operations may correspond to some or all of the instructions (e.g., the software and/or firmware) represented by the flowcharts of FIGS. 5-7. As such, the FPGA circuitry 1000 may be configured and/or structured to effectively instantiate some or all of the operations/functions corresponding to the machine readable instructions of the flowcharts of FIGS. 5-7 as dedicated logic circuits to perform the operations/functions corresponding to those software instructions in a dedicated manner analogous to an ASIC. Therefore, the FPGA circuitry 1000 may perform the operations/functions corresponding to the some or all of the machine readable instructions of FIGS. 5-7 faster than the general-purpose microprocessor can execute the same.

In the example of FIG. 10, the FPGA circuitry 1000 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 1000 of FIG. 10 may access and/or load the binary file to cause the FPGA circuitry 1000 of FIG. 10 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1000 of FIG. 10 to cause configuration and/or structuring of the FPGA circuitry 1000 of FIG. 10, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 1000 of FIG. 10 may access and/or load the binary file to cause the FPGA circuitry 1000 of FIG. 10 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1000 of FIG. 10 to cause configuration and/or structuring of the FPGA circuitry 1000 of FIG. 10, or portion(s) thereof.

The FPGA circuitry 1000 of FIG. 10, includes example input/output (I/O) circuitry 1002 to obtain and/or output data to/from example configuration circuitry 1004 and/or external hardware 1006. For example, the configuration circuitry 1004 may be implemented by interface circuitry that may obtain a binary file, which may be implemented by a bit stream, data, and/or machine-readable instructions, to configure the FPGA circuitry 1000, or portion(s) thereof. In some such examples, the configuration circuitry 1004 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 1006 may be implemented by external hardware circuitry. For example, the external hardware 1006 may be implemented by the microprocessor 900 of FIG. 9.

The FPGA circuitry 1000 also includes an array of example logic gate circuitry 1008, a plurality of example configurable interconnections 1010, and example storage circuitry 1012. The logic gate circuitry 1008 and the configurable interconnections 1010 are configurable to instantiate one or more operations/functions that may correspond to at least some of the machine readable instructions of FIGS. 5-7 and/or other desired operations. The logic gate circuitry 1008 shown in FIG. 10 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1008 to enable configuration of the electrical structures and/or the logic gates to form circuits to perform desired operations/functions. The logic gate circuitry 1008 may include other electrical structures such as look-up tables (LUTs), registers (e.g., flip-flops or latches), multiplexers, etc.

The configurable interconnections 1010 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1008 to program desired logic circuits.

The storage circuitry 1012 of the illustrated example is structured to store result(s) of the one or more of the operations performed by corresponding logic gates. The storage circuitry 1012 may be implemented by registers or the like. In the illustrated example, the storage circuitry 1012 is distributed amongst the logic gate circuitry 1008 to facilitate access and increase execution speed.

The example FPGA circuitry 1000 of FIG. 10 also includes example dedicated operations circuitry 1014. In this example, the dedicated operations circuitry 1014 includes special purpose circuitry 1016 that may be invoked to implement commonly used functions to avoid the need to program those functions in the field. Examples of such special purpose circuitry 1016 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1000 may also include example general purpose programmable circuitry 1018 such as an example CPU 1020 and/or an example DSP 1022. Other general purpose programmable circuitry 1018 may additionally or alternatively be present such as a GPU, an XPU, etc., that can be programmed to perform other operations.

Although FIGS. 9 and 10 illustrate two example implementations of the programmable circuitry 812 of FIG. 8, many other approaches are contemplated. For example, FPGA circuitry may include an on-board CPU, such as one or more of the example CPU 1020 of FIG. 10. Therefore, the programmable circuitry 812 of FIG. 8 may additionally be implemented by combining at least the example microprocessor 900 of FIG. 9 and the example FPGA circuitry 1000 of FIG. 10. In some such hybrid examples, one or more cores 1002 of FIG. 10 may execute a first portion of the machine readable instructions represented by the flowchart(s) of FIGS. 5-7 to perform first operation(s)/function(s), the FPGA circuitry 1000 of FIG. 10 may be configured and/or structured to perform second operation(s)/function(s) corresponding to a second portion of the machine readable instructions represented by the flowcharts of FIGS. 5-7, and/or an ASIC may be configured and/or structured to perform third operation(s)/function(s) corresponding to a third portion of the machine readable instructions represented by the flowcharts of FIGS. 5-7.

It should be understood that some or all of the circuitry of FIG. 5 may, thus, be instantiated at the same or different times. For example, same and/or different portion(s) of the microprocessor 900 of FIG. 9 may be programmed to execute portion(s) of machine-readable instructions at the same and/or different times. In some examples, same and/or different portion(s) of the FPGA circuitry 1000 of FIG. 10 may be configured and/or structured to perform operations/functions corresponding to portion(s) of machine-readable instructions at the same and/or different times.

In some examples, some or all of the circuitry of FIG. 5 may be instantiated, for example, in one or more threads executing concurrently and/or in series. For example, the microprocessor 900 of FIG. 9 may execute machine readable instructions in one or more threads executing concurrently and/or in series. In some examples, the FPGA circuitry 1000 of FIG. 10 may be configured and/or structured to carry out operations/functions concurrently and/or in series. Moreover, in some examples, some or all of the circuitry of FIG. 5 may be implemented within one or more virtual machines and/or containers executing on the microprocessor 900 of FIG. 9.

In some examples, the programmable circuitry 812 of FIG. 8 may be in one or more packages. For example, the microprocessor 900 of FIG. 9 and/or the FPGA circuitry 1000 of FIG. 10 may be in one or more packages. In some examples, an XPU may be implemented by the programmable circuitry 812 of FIG. 8 which may be in one or more packages. For example, the XPU may include a CPU (e.g., the microprocessor 900 of FIG. 9, the CPU 1020 of FIG. 10, etc.) in one package, a DSP (e.g., the DSP 1022 of FIG. 10) in another package, a GPU in yet another package, and an FPGA (e.g., the FPGA circuitry 1000 of FIG. 10) in still yet another package.

A block diagram illustrating an example software distribution platform 1105 to distribute software such as the example machine readable instructions 832 of FIG. 8 to other hardware devices (e.g., hardware devices owned and/or operated by third parties from the owner and/or operator of the software distribution platform) is illustrated in FIG. 11. The example software distribution platform 1105 may be implemented by any computer server, data facility, cloud service, etc., capable of storing and transmitting software to other computing devices. The third parties may be customers of the entity owning and/or operating the software distribution platform 1105. For example, the entity that owns and/or operates the software distribution platform 1105 may be a developer, a seller, and/or a licensor of software such as the example machine readable instructions 832 of FIG. 8. The third parties may be consumers, users, retailers, OEMs, etc., who purchase and/or license the software for use and/or re-sale and/or sub-licensing. In the illustrated example, the software distribution platform 1105 includes one or more servers and one or more storage devices. The storage devices store the machine readable instructions 832, which may correspond to the example machine readable instructions of FIGS. 5-7, as described above. The one or more servers of the example software distribution platform 805 are in communication with an example network 810, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 832 from the software distribution platform 1105. For example, the software, which may correspond to the example machine readable instructions of FIGS. 5-7, may be downloaded to the example programmable circuitry platform 800, which is to execute the machine readable instructions 832 to implement the object identifier circuitry 201 of FIG. 2. In some examples, one or more servers of the software distribution platform 1105 periodically offer, transmit, and/or force updates to the software (e.g., the example machine readable instructions 832 of FIG. 8) to ensure improvements, patches, updates, etc., are distributed and applied to the software at the end user devices. Although referred to as software above, the distributed "software" could alternatively be firmware.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example, an integrated circuit may be implemented as one or more of an ASIC, an FPGA, a chip, a microchip, programmable circuitry, a semiconductor substrate coupling multiple circuit elements, a system on chip (SoC), etc.

From the foregoing, it will be appreciated that example systems, methods, apparatus, and articles of manufacture disclosed herein introduce an improved version of a deep encoder with auxiliary parameters (DEXA) for extreme classification. In examples disclosed herein, the encoder includes the use of label representations such as estimated label prototypes. In particular, label representation is improved by (1) deploying a more elaborate DEXA architecture to fuse various views of label-based correction terms, and (2) aggregate information from relevant documents via the estimated label prototypes. In examples disclosed herein, a self-attention module fuses the various sources of information associated with label representations (e.g., text-embedding information, auxiliary parameters, estimated prototypes, etc.) to obtain a final product representation as part of product-to-product recommendation. In particular, the DEXA architecture disclosed herein employs no additional computational overhead (e.g., in terms of graphics processing unit (GPU)-based memory), thereby employing less expensive computational resources, demanding lower power requirements, and exhibiting lower thermal emission, as compared to known architectures. Disclosed systems, methods, apparatus, and articles of manufacture are accordingly directed to one or more improvement(s) in the operation of a machine such as a computer or other electronic and/or mechanical device.

Example methods, apparatus, systems, and articles of manufacture for object-to-object recommendation using label prototypes and self-attention are disclosed herein. Further examples and combinations thereof include the following:

Example 1 includes an apparatus, comprising interface circuitry, machine-readable instructions, and at least one processor circuit to be programmed by the machine-readable instructions to identify a first source of object label representation and a second source of object label representation, the first source or the second source including an estimated label prototype vector associated with an input text-based object query, determine a first contextualized embedding for the first source and a second contextualized embedding for the second source, and combine the first contextualized embedding and the second contextualized embedding to generate a candidate object representation associated with the input text-based object query.

Example 2 includes the apparatus of example 1, wherein the first source of object label representation is a text-based embedding vector and the second source of object label representation is an auxiliary parameter vector.

Example 3 includes the apparatus of example 2, wherein one or more of the at least one processor circuit is to determine the text-based embedding vector by performing a pooling operation to average contextualized vectors associated with the text-based object query.

Example 4 includes the apparatus of example 2, wherein one or more of the at least one processor circuit is to combine the first contextualized embedding and the second contextualized embedding using a self-attention module.

Example 5 includes the apparatus of example 1, wherein one or more of the at least one processor circuit is to transmit the candidate object representation for processing to initiate an action based on the type of recommendation associated with the candidate object representation.

Example 6 includes the apparatus of example 1, wherein one or more of the at least one processor circuit is to identify the estimated label prototype vector using at least one of (1) a document associated with an object-identifying label or (2) a normalization operator.

Example 7 includes the apparatus of example 1, wherein one or more of the at least one processor circuit is to identify a loss function to match a similarity of document embedding and label embedding in a semantic space.

Example 8 includes a method comprising identifying a first source of object label representation and a second source of object label representation, the first source or the second source including an estimated label prototype vector associated with an input text-based object query, determining, by at least one processor circuit programmed by at least one instruction, a first contextualized embedding for the first source and a second contextualized embedding for the second source, and combining, by one or more of the at least one processor circuit, the first contextualized embedding and the second contextualized embedding to generate a candidate object representation associated with the input text-based object query.

Example 9 includes the method of example 8, wherein the first source of object label representation is a text-based embedding vector and the second source of object label representation is an auxiliary parameter vector.

Example 10 includes the method of example 9, further including determining the text-based embedding vector by performing a pooling operation to average contextualized vectors associated with the text-based object query.

Example 11 includes the method of example 9, further including combining the first contextualized embedding and the second contextualized embedding using a self-attention module.

Example 12 includes the method of example 8, further including transmitting the candidate object representation for processing to initiate an action based on the type of recommendation associated with the candidate object representation.

Example 13 includes the method of example 8, further including identifying the estimated label prototype vector using at least one of (1) a document associated with an object-identifying label or (2) a normalization operator.

Example 14 includes the method of example 8, further including identifying a loss function to match a similarity of document embedding and label embedding in a semantic space.

Example 15 includes At least one non-transitory machine-readable medium comprising machine-readable instructions to cause at least one processor circuit to at least identify a first source of object label representation and a second source of object label representation, the first source or the second source including an estimated label prototype vector associated with an input text-based object query, determine a first contextualized embedding for the first source and a second contextualized embedding for the second source, and combine the first contextualized embedding and the second contextualized embedding to generate a candidate object representation associated with the input text-based object query.

Example 16 includes the at least one non-transitory machine-readable medium of example 15, wherein the first source of object label representation is a text-based embedding vector and the second source of object label representation is an auxiliary parameter vector.

Example 17 includes the at least one non-transitory machine-readable medium of example 16, wherein the machine-readable instructions are to cause one or more of the at least one processor circuit to determine the text-based embedding vector by performing a pooling operation to average contextualized vectors associated with the text-based object query.

Example 18 includes the at least one non-transitory machine-readable medium of example 16, wherein the machine-readable instructions are to cause one or more of the at least one processor circuit to combine the first contextualized embedding and the second contextualized embedding using a self-attention module.

Example 19 includes the at least one non-transitory machine-readable medium of example 15, wherein the machine-readable instructions are to cause one or more of the at least one processor circuit to transmit the candidate object representation for processing to initiate an action based on the type of recommendation associated with the candidate object representation.

Example 20 includes the at least one non-transitory machine-readable medium of example 15, wherein the machine-readable instructions are to cause one or more of the at least one processor circuit to identify the estimated label prototype vector using at least one of (1) a document associated with an object-identifying label or (2) a normalization operator.

The following claims are hereby incorporated into this Detailed Description by this reference. Although certain example systems, methods, apparatus, and articles of manufacture have been disclosed herein, the scope of coverage of this patent is not limited thereto. On the contrary, this patent covers all systems, methods, apparatus, and articles of manufacture fairly falling within the scope of the claims of this patent.

**Claims**

1. A method comprising:

   identifying a first source of object label representation and a second source of object label representation, the first source or the second source including an estimated label prototype vector associated with an input text-based object query;
   determining, by at least one processor circuit programmed by at least one instruction, a first contextualized embedding for the first source and a second contextualized embedding for the second source; and
   combining, by one or more of the at least one processor circuit, the first contextualized embedding and the second contextualized embedding to generate a candidate object representation associated with the input text-based object query.

2. The method of claim 1, wherein the first source of object label representation is a text-based embedding vector and the second source of object label representation is an auxiliary parameter vector.

3. The method of claim 2, further including determining the text-based embedding vector by performing a pooling operation to average contextualized vectors associated with the text-based object query.

4. The method of any preceding claim, further including combining the first contextualized embedding and the second contextualized embedding using a self-attention module.

5. The method of any preceding claim, further including transmitting the candidate object representation for processing to initiate an action based on the type of recommendation associated with the candidate object representation.

6. The method of any preceding claim, further including identifying the estimated label prototype vector using at least one of (1) a document associated with an object-identifying label or (2) a normalization operator.

7. The method of any preceding claim, further including identifying a loss function to match a similarity of document embedding and label embedding in a semantic space.

8. At least one machine-readable medium comprising machine-readable instructions to cause at least one processor circuit to at least:

   identify a first source of object label representation and a second source of object label representation, the first source or the second source including an estimated label prototype vector associated with an input text-based object query;
   determine a first contextualized embedding for the first source and a second contextualized embedding for the second source; and
   combine the first contextualized embedding and the second contextualized embedding to generate a candidate object representation associated with the input text-based object query.

9. The at least one machine-readable medium of claim 8, wherein the first source of object label representation is a text-based embedding vector and the second source of object label representation is an auxiliary parameter vector.

10. The at least one machine-readable medium of claim 9, wherein the machine-readable instructions are to cause one or more of the at least one processor circuit to determine the text-based embedding vector by performing a pooling operation to average contextualized vectors associated with the text-based object query.

11. The at least one machine-readable medium of claim, wherein the machine-readable instructions are to cause one or more of the at least one processor circuit to combine the first contextualized embedding and the second contextualized embedding using a self-attention module.

12. The at least one machine-readable medium of any preceding claim, wherein the machine-readable instructions are to cause one or more of the at least one processor circuit to transmit the candidate object representation for processing to initiate an action based on the type of recommendation associated with the candidate object representation.

13. The at least one machine-readable medium of any preceding claim, wherein the machine-readable instructions are to cause one or more of the at least one processor circuit to identify the estimated label prototype vector using at least one of (1) a document associated with an object-identifying label or (2) a normalization operator.

14. An apparatus comprising means to perform a method as claimed in any preceding claim.

**FIG. 1**

EP 4 641 445 A1

**FIG. 2**

300

| METHOD (LABEL REPRESENTATION) | PRECISION@1 | PRECISION@5 | RECALL@100 |
|---|---|---|---|
| DEXA  $\mathcal{F}_\phi(z_i, \eta_i)$ *350* | 42.04 | 20.15 | **64.87** |
| DEXA++  $g_\phi(z_i, \eta_i)$ *352* | 42.89 | 20.30 | 64.33 |
| DEXA++  $g_\phi(z_i, \mu_i, \eta_i)$ *354* | **43.28** | **20.52** | 64.61 |

305 310 315 320

# FIG. 3

400 —

OBJECT IDENTIFIER CIRCUITRY 201

420

QUERY IDENTIFIER
CIRCUITRY
402

POOLING INITIATOR
CIRCUITRY
406

ESTIMATED PROTOTYPE
IDENTIFIER CIRCUITRY
410

LOSS FUNCTION
DETERMINER CIRCUITRY
414

TEXT-BASED EMBEDDING
GENERATOR CIRCUITRY
404

AUXILIARY PARAMETER
IDENTIFIER CIRCUITRY
408

CONTEXTUALIZED
EMBEDDING
GENERATOR CIRCUITRY
412

DATA STORAGE
416

FIG. 4

500 ─

( START )

↓

IDENTIFY TEXT-BASED INPUT QUERIES ASSOCIATED
WITH AN OBJECT OF INTEREST                           505

↓

DETERMINE VECTOR REPRESENTATIONS OF
TEXT-BASED INPUT QUERIES USING A
TRANSFORMER-BASED NEURAL NETWORK              510

↓

PERFORM A FIRST POOLING OPERATION TO AVERAGE
TEXT-BASED EMBEDDING VECTORS                     515

↓

OBTAIN A FIRST SINGLE VECTOR REPRESENTATION OF
CANDIDATE OBJECT DESCRIPTION BASED
ON THE FIRST POOLING OPERATION                    520

↓

IDENTIFY AUXILIARY PARAMETERS                      525

↓

IDENTIFY ESTIMATED LABEL PROTOTYPES               530

↓

OBTAIN A SECOND SINGLE VECTOR REPRESENTATION OF
CANDIDATE OBJECT DESCRIPTION BASED ON IDENTIFIED
LABEL REPRESENTATIONS                             535

↓

OUTPUT REPRESENTATION OF CANDIDATE OBJECT
ASSOCIATED WITH THE ORIGINAL INPUT TEXT-BASED QUERIES   540

↓

( END )

**FIG. 5**

530 ⌐

```
┌─────────────────────────────────────────────┐
│      IDENTIFY ESTIMATED LABEL PROTOTYPES     │
└─────────────────────────────────────────────┘
                      │
                      ▼
┌─────────────────────────────────────────────┐
│  IDENTIFY DOCUMENT(S) ASSOCIATED WITH LABELS │   605
│       IDENTIFYING THE OBJECT OF INTEREST     │
└─────────────────────────────────────────────┘
                      │
                      ▼
┌─────────────────────────────────────────────┐
│ DEFINE ESTIMATED LABEL PROTOTYPE BASED ON    │   610
│ IDENTIFIED                                   │
│  DOCUMENT(S) AND NORMALIZATION OPERATOR      │
└─────────────────────────────────────────────┘
                      │
                      ▼
┌─────────────────────────────────────────────┐
│  UPDATE ESTIMATE OF LABEL PROTOTYPE BASED ON │   615
│            DOCUMENT REPRESENTATION           │
│       ASSOCIATED WITH A TRAINING STEP        │
└─────────────────────────────────────────────┘
                      │
                      ▼
               ┌──────────────┐
               │    RETURN     │
               └──────────────┘
```

# FIG. 6

535

OBTAIN A SECOND SINGLE VECTOR REPRESENTATION OF CANDIDATE
OBJECT DESCRIPTION BASED ON IDENTIFIED LABEL REPRESENTATIONS

INPUT TEXT-BASED EMBEDDING VECTOR, AUXILIARY
PARAMETER VECTOR, AND ESTIMATED LABEL PROTOTYPE
VECTOR INTO SELF-ATTENTION MODULE
705

IDENTIFY LOSS FUNCTION TO OPTIMIZE SIMILARITY OF
DOCUMENT AND LABEL EMBEDDINGS IN SEMANTIC SPACE
710

DETERMINE CONTEXTUALIZED EMBEDDINGS FOR EACH
SOURCE OF OBJECT LABEL REPRESENTATION
715

PERFORM A SECOND POOLING OPERATION TO AGGREGATE
THE CONTEXTUALIZED EMBEDDINGS
720

RETURN

# FIG. 7

FIG. 8

FIG. 9

**FIG. 10**

1100

SOFTWARE
DISTRIBUTION
PLATFORM
1105

INSTR
832

1110

NETWORK

PROCESSOR
PLATFORM(S)
800

832

FIG. 11

Europäisches
Patentamt

European
Patent Office

Office européen
des brevets

# EUROPEAN SEARCH REPORT

**Application Number**

EP 25 17 1934

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DAHIYA KUNAL ET AL: "Deep Encoders with Auxiliary Parameters for Extreme Classification", PROCEEDINGS OF THE GENETIC AND EVOLUTIONARY COMPUTATION CONFERENCE, ACMPUB27, NEW YORK, NY, USA, 6 August 2023 (2023-08-06), pages 358-367, XP059589433, DOI: 10.1145/3580305.3599301 ISBN: 979-8-4007-0119-1 * page 358 - page 366 * | 1-14 | INV. G06N3/0455 G06N3/09 |
| X | LIN XIAO ET AL: "Does Head Label Help for Long-Tailed Multi-Label Text Classification", ARXIV.ORG, CORNELL UNIVERSITY LIBRARY, 201 OLIN LIBRARY CORNELL UNIVERSITY ITHACA, NY 14853, 24 January 2021 (2021-01-24), XP081866379, * page 1 - page 4 * * page 7 - page 7 * | 1,8,14 | |
| A | JAKE SNELL ET AL: "Prototypical Networks for Few-shot Learning", ARXIV.ORG, CORNELL UNIVERSITY LIBRARY, 201 OLIN LIBRARY CORNELL UNIVERSITY ITHACA, NY 14853, 15 March 2017 (2017-03-15), XP080757116, * the whole document * -/-- | 1-14 | TECHNICAL FIELDS SEARCHED (IPC) G06N |

The present search report has been drawn up for all claims

| Place of search | Date of completion of the search | Examiner |
|---|---|---|
| The Hague | 10 September 2025 | Cilia, Elisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 25 17 1934

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JIALI ZENG ET AL: "Contrastive Learning with Prompt-derived Virtual Semantic Prototypes for Unsupervised Sentence Embedding", ARXIV.ORG, CORNELL UNIVERSITY LIBRARY, 201 OLIN LIBRARY CORNELL UNIVERSITY ITHACA, NY 14853, 11 December 2022 (2022-12-11), XP091391295, * the whole document * | 1-14 | |

-----

TECHNICAL FIELDS
SEARCHED    (IPC)

The present search report has been drawn up for all claims

| Place of search | Date of completion of the search | Examiner |
|---|---|---|
| The Hague | 10 September 2025 | Cilia, Elisa |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    .................................................................................

& : member of the same patent family, corresponding
    document

EPO FORM 1503 03.82 (P04C01)